# FASCICULE DE BREVET EUROPEEN

(11) **EP 0 673 038 B1**
(45) Date de publication et mention de la délivrance du brevet: **18.06.1997**
(21) Numéro de dépôt: 95400534.4
(22) Date de dépôt: 13.03.1995
(51) Int. Cl.: G21C 3/334

(54) **Dispositif de maintien d'un tube de guidage pour réacteur nucléaire**
Vorrichtung zur Halterung eines Leitrohrs in einem Kernreaktor
Guide tube retaining device for nuclear reactor

(30) Priorité: 15.03.1994 US 213321
(43) Date de publication de la demande: 20.09.1995
(73) Titulaire: B & W FUEL COMPANY, Lynchburg, VA 24506-0935 (US)
(72) Inventeur: Attix, Douglas Jeffrey, Lynchburg, VA 24502 (US)
(74) Mandataire: Armengaud Ainé, Alain

(56) Documents cités:
- EP-A- 0 401 083
- EP-A- 0 493 201
- US-A- 2 823 932
- US-A- 3 183 297
- US-A- 3 769 158
- US-A- 4 036 692
- US-A- 4 366 116

## Description

### ARRIERE-PLAN DE L'INVENTION

### 1. Champ de l'invention

L'invention se rapporte de façon générale à des assemblages combustibles nucléaires et, plus particulièrement, à un dispositif de verrouillage réutilisable, destiné à des tubes de guidage et à des dispositifs d'ajustement d'extrémité supérieure et/ou inférieure.

### 2. Arrière-plan général

Dans un coeur de réacteur nucléaire, chaque assemblage combustible est ajusté avec un certain nombre de tubes de guidage qui sont utilisés pour recevoir des barres de contrôle.

Dans l'industrie nucléaire, les tubes qui sont utilisés pour recevoir ces barres de contrôle sont généralement référencés comme « tubes de guidage » ou «tubes chaussettes », la structure interne supérieure à laquelle ces tubes sont fixés étant désignée sous le terme d'ensemble d'ajustement d'extrémité supérieure ou buse d'injection supérieure, selon le fabricant. En conséquence, il sera compris que les références à un tube de guidage et à un ensemble d'ajustement d'extrémité devront être considérées ici comme se référant également à un tube chaussette et à une buse d'injection supérieure.

Les tubes de guidage ont une épaisseur de paroi relativement mince et requièrent ainsi un manchon au niveau de leur extrémité supérieure notamment pour fournir le support nécessaire à des points de fixation et à des butées à épaulement. Pendant l'assemblage, les tubes de guidage sont insérés dans des grilles d'écartement.

L'ensemble d'ajustement d'extrémité est alors aligné avec les manchons d'extrémité supérieure de ces tubes de guidage, reçu sur ces manchons, et fixé sur eux. De façon typique, les ensembles d'ajustement d'extrémité supérieure et les manchons sont fixés l'un à l'autre, en utilisant des joints filetés et des coupelles de verrouillage.

Quand il devient nécessaire de retirer un ensemble d'ajustement d'extrémité supérieure d'un assemblage combustible irradié ou une buse d'injection au niveau du site du réacteur, le travail doit être effectué avec un outillage commandé à distance sous l'eau. Cela aboutit à la manipulation d'un certain nombre de pièces et fournit la possibilité d'un vissage transversal des moyens de fixation pendant l'installation.

La manipulation à distance d'un certain nombre de pièces sous l'eau augmente la possibilité de perdre ces pièces dans le système, ce qui peut endommager le réacteur et augmenter le temps de travail.

Des brevets antérieurs concernent des agencements de maintien pour des ensembles d'ajustement d'extrémité pour assemblage combustible nucléaire, que le demandeur entend inclure dans ce qui suit.

Le brevet U.S. N° 3 769 158 décrit ainsi l'utilisation d'un ensemble d'ajustement d'extrémité au-dessus des barres de combustible où un rétrécissement réduit, s'étendant à travers l'ouverture de cet ensemble, comporte des bagues à fentes élastiques montées dans des gorges et qui engagent cet ensemble d'ajustement d'extrémité.

Le brevet U.S. N° 3 828 868 décrit des tubes de guidage qui sont fixés par vissage à l'ensemble d'ajustement d'extrémité.

Le brevet U.S. N° 4 699 761 décrit l'utilisation d'un manchon fileté sur l'extrémité supérieure d'un tube de guidage.

### RESUME DE L'INVENTION

L'invention concerne le besoin précédent. Ce qui est prévu est un dispositif de verrouillage réutilisable, d'une seule pièce, entre le tube de guidage et l'ensemble d'ajustement d'extrémité qui élimine toute perte des composants de fixation au niveau du site du réacteur. Un manchon de maintien est prévu à l'extrémité supérieure du tube de guidage. Ce manchon de maintien est formé d'un tube cylindrique qui comporte une pluralité de pattes flexibles, espacées autour de la circonférence du tube au niveau de l'extrémité inférieure et pratiquement au niveau de la section médiane du tube. Les pattes inférieures servent à centrer le tube de guidage dans un trou dans l'ensemble d'ajustement d'extrémité et confèrent une connexion plus rigide. Les pattes de section médiane sont reçues contre l'épaulement d'un lamage cylindrique dans le trou de cet ensemble et servent à retenir le tube de guidage et cet ensemble dans la position de mise en place. Un manchon ou douille de serrage peut être inséré dans le lamage cylindrique pour forcer les pattes vers l'intérieur et débloquer le manchon de maintien et le tube de guidage.

### BREVE DESCRIPTION DES DESSINS

Pour une meilleure compréhension de la nature et des buts de la présente invention, référence sera faite à la description suivante, prise en relation avec les dessins d'accompagnement dans lesquels les parties analogues sont données avec les mêmes chiffres de référence, et dans lesquels :

La figure 1 est une vue en coupe d'un tube de guidage installé dans un ensemble d'ajustement d'extrémité supérieure utilisant l'invention.

La figure 2 est une vue en perspective du manchon de maintien selon l'invention.

La figure 3 est une vue en coupe d'un autre mode de réalisation de l'invention.

La figure 4 est une vue en perspective du manchon de maintien de ce second mode de réalisation.

### DESCRIPTION DETAILLEE DU MODE PREFERE DE REALISATION

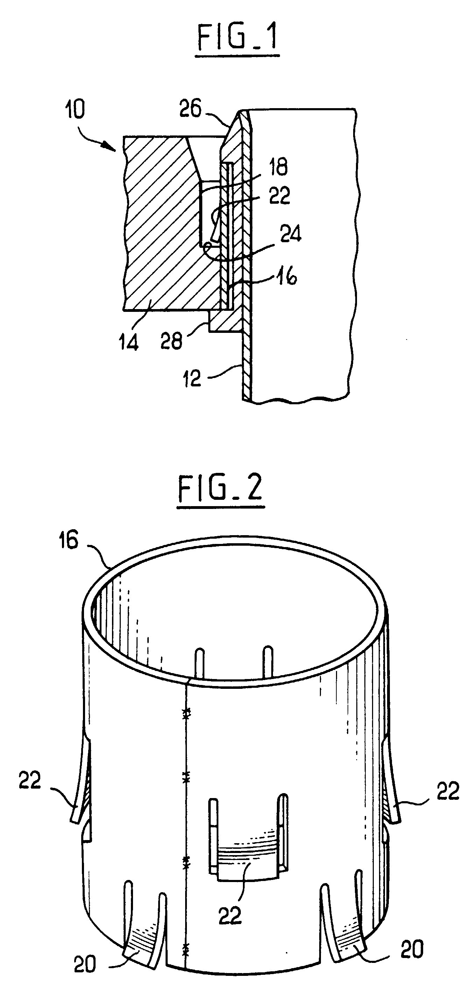

En se rapportant aux dessins, on observe dans la figure 1 que le dispositif de l'invention est désigné globalement par le chiffre 10. Ce dispositif de verrouillage 10 est intégré au tube de guidage 12 et à un ensemble d'ajustement d'extrémité supérieure 14. Il est conçu pour être réutilisable sans avoir à retirer les autres pièces séparables du système.

Le dispositif de verrouillage 10 est globalement constitué d'un manchon de maintien 16, qui coopère avec un lamage cylindrique 18 dans l'ensemble d'ajustement d'extrémité supérieure 14 pour bloquer ensemble le tube de guidage et ce dispositif dans leur position de mise en place.

Comme montré dans la figure 2, le manchon de maintien 16 est formé d'un tube cylindrique qui est prévu avec une pluralité de pattes flexibles 20,22, qui s'étendent vers l'extérieur et sont espacées autour de la circonférence du tube. Les pattes 20 sont placées au niveau de l'extrémité inférieure du tube tandis que les pattes 22 sont disposées pratiquement au niveau de la section médiane de ce tube.

Les pattes 20 servent à centrer le tube de guidage 12 dans le trou à travers l'ensemble d'ajustement d'extrémité supérieure 14 et confèrent une connexion plus rigide. Les pattes 22 servent à maintenir le tube de guidage 12 et le dispositif d'ajustement d'extrémité supérieure dans leur position de mise en place l'un par rapport à l'autre.

Dans cette position de mise en place, les pattes 22 s'étendent vers l'extérieur juste au-dessus de l'épaulement 24 du lamage cylindrique 18. Cela empêche le dispositif d'ajustement d'extrémité supérieure 14 de sortir du tube de guidage 12.

Afin de fournir l'action de rappel élastique nécessaire, le manchon de maintien 16 est, de préférence, fait d'un matériau qui est utilisé pour les ressorts et qui convient à une utilisation dans une application nucléaire, tel qu'un alliage de nickel 718.

Comme montré dans la figure 1, le tube de guidage 12 est muni d'un manchon d'extrémité supérieure 26 qui sert de point de fixation pour le manchon de maintien 16. Ce manchon de maintien 16 peut être fixé au manchon d'extrémité supérieure 26 selon toute méthode convenable, par brasure ou soudure ou en étant partie intégrante de celui-ci.

Puisque les tubes de guidage sont habituellement relativement minces, (environ 19 mils), un manchon d'extrémité supérieure est normalement inclus sur les tubes de guidage pour fournir un point de fixation au dispositif d'ajustement d'extrémité supérieure et pour procurer le support nécessaire pour une butée à épaulement 28, afin d'empêcher l'ensemble d'ajustement d'extrémité supérieure de se déplacer vers le bas du tube de guidage, lorsque le tube se trouve dans la position verticale.

Pendant l'assemblage, l'ensemble d'ajustement d'extrémité supérieure 14 est poussé sur le manchon d'extrémité supérieure 26 et le dispositif de maintien du manchon 16. Les pattes 20 et 22 sont forcées vers l'intérieur lorsque l'ensemble d'ajustement d'extrémité coulisse sur le tube de guidage. Quand cet ensemble d'ajustement d'extrémité 14 est complètement en appui, les pattes 22 font saillie à l'extérieur au-dessus de l'épaulement 24 et retiennent l'ensemble d'ajustement d'extrémité supérieure et le tube de guidage 12 dans leurs positions relatives de mise en place.

Les pattes 20 maintiennent la pression contre les parois du trou principal à travers l'ensemble d'ajustement d'extrémité 14 pour maintenir le tube 12 dans une position centrée et fournir une connexion plus rigide.

Le retrait de cet ensemble d'ajustement d'extrémité 14 est effectué en poussant le manchon ou douille de serrage 16 pour forcer les pattes 22 vers l'intérieur et, ensuite, faire coulisser l'ensemble d'ajustement d'extrémité 14 vers le haut jusqu'à ce que le trou principal engage les pattes 22 et permette le retrait final.

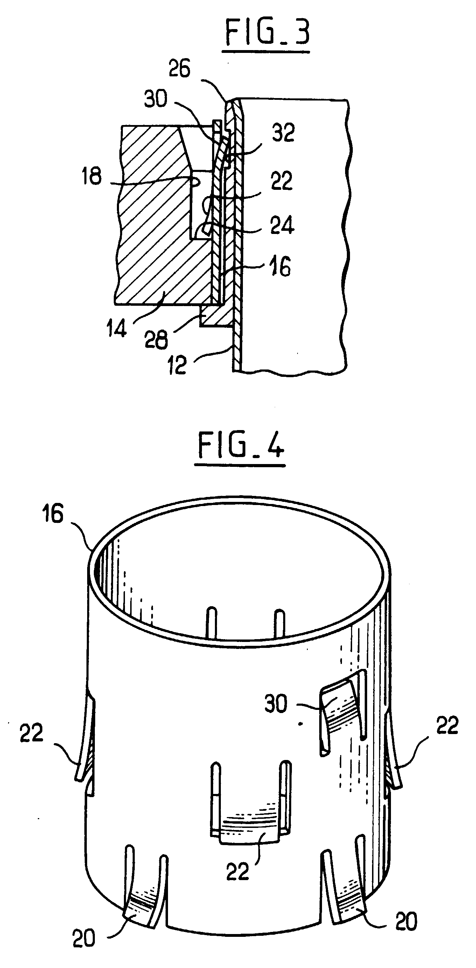

Les figures 3 et 4 illustrent une variante de réalisation de l'invention dans laquelle le manchon de maintien 16 est fixé au manchon d'extrémité supérieure 26 en utilisant des pattes tournées vers l'intérieur 30, dont l'une seulement est représentée dans la figure 4.

Une pluralité de pattes tournées vers l'intérieur 30 sont espacées autour de la circonférence adjacente à l'extrémité supérieure du manchon de maintien 16. Le nombre, la forme et la dimension des pattes 30 varieront selon la conception du réacteur. Le manchon d'extrémité supérieure 26 est pourvue d'une gorge 32 située autour de la circonférence adjacente à l'extrémité supérieure, qui est dimensionnée pour recevoir les pattes 30 et retenir le manchon de maintien 16 en place sur le manchon 26.

Parce que de nombreux modes de réalisation divers et variés peuvent être réalisés dans le domaine du concept de l'invention ici envisagé et parce que de nombreuses modifications peuvent être envisagées dans le mode de réalisation détaillé ici, on peut comprendre que les détails doivent être interprétés comme illustratifs et non dans un sens limitatif.

En particulier, le dispositif de verrouillage considéré, plus spécialement décrit avec un montage à l'extrémité supérieure du tube de guidage, pourrait de même être prévu à la partie inférieure de celui-ci.

## Revendications

1. Dispositif de verrouillage (10) réutilisable, pour assemblage combustible, comportant un ensemble d'ajustement d'extrémité (14) possédant une pluralité de trous le traversant, chacun étant dimensionné pour recevoir un tube de guidage (12) de barre de contrôle, ce tube de guidage incluant un manchon d'extrémité (26) comportant un épaulement (28) s'étendant radialement au niveau de son extrémité inférieure, ce dispositif étant formé d'une seule pièce (10), entre le tube de guidage (12) et l'ensemble d'ajustement d'extrémité (14), caractérisé en ce que :
a) ledit ensemble d'ajustement d'extrémité (14) comporte un lamage cylindrique (18) dans chacun desdits trous dimensionnés pour recevoir un tube de guidage (12);
b) un tube cylindrique (16) étant monté concentriquement avec ledit tube de guidage, ledit tube cylindrique comportant une pluralité de pattes flexibles (20,22) qui s'étendent vers l'extérieur et espacées circonférentiellement autour de l'extrémité inférieure et pratiquement au niveau de la section médiane dudit tube, de sorte que les pattes au niveau de cette section médiane soient reçues dans le lamage cylindrique (18) de l'ensemble d'ajustement d'extrémité.

2. Dispositif de verrouillage réutilisable pour assemblage combustible, comportant un ensemble d'ajustement d'extrémité (14) possédant une pluralité de trous le traversant, chacun étant dimensionné pour recevoir un tube de guidage (12) de barre de contrôle, ce tube de guidage incluant un manchon d'extrémité (26) comportant un épaulement (28) s'étendant radialement au niveau de son extrémité inférieure, ce dispositif étant formé d'une seule pièce (10), entre le tube de guidage (12) et l'ensemble d'ajustement d'extrémité (14), caractérisé en ce que :
a) ledit manchon d'extrémité (26) comporte une gorge (32) autour de la circonférence adjacente à l'extrémité dudit manchon ; et
b) ledit ensemble d'ajustement d'extrémité (14) comporte un lamage cylindrique (18) dans chacun desdits trous dimensionnés pour recevoir le tube de guidage (12);
c) un tube cylindrique (16) étant monté concentriquement audit manchon, ledit tube cylindrique comportant une pluralité de pattes flexibles s'étendant vers l'extérieur (20,22) et espacées circonférentiellement autour de son extrémité inférieure et situées pratiquement au niveau de la section médiane dudit tube de sorte que les pattes situées au niveau de cette section médiane soient reçues dans le lamage cylindrique (18) situé dans l'ensemble d'ajustement d'extrémité, et une pluralité de pattes flexibles s'étendant vers l'intérieur (30) et espacées circonférentiellement adjacentes à l'extrémité supérieure dudit tube de façon que lesdites pattes tournées vers l'intérieur soient dimensionnées pour être reçues dans la gorge (32) située autour dudit manchon (26).

3. Dispositif selon l'une des revendications 1 ou 2, caractérisé en ce qu'il est prévu à l'extrémité supérieure ou inférieure du tube guide.

## Patentansprüche

1. Wiederverwendbare Verriegelungsvorrichtung 10 für Brennelementbündel, die eine Anordnung zur Endeinstellung (14) besitzt, die eine Vielzahl von Öffnungen besitzt, die die Anordnung durchsetzen, wobei jede für die Aufnahme eines Steuerstabführungsrohres (12) bemessen ist, wobei dieses Führungsrohr eine Endhülse (26) umfaßt, die einen Vorsprung (28) umfaßt, der sich radial auf Höhe ihres unteren Endes erstreckt, wobei diese Vorrichtung durch ein einziges Teil (10) zwischen dem Führungsrohr (12) und der Anordnung zur Endeinstellung (14) gebildet wird, dadurch gekennzeichnet, daß:
a) die Anordnung zur Endeinstellung (14) eine zylindrische Senkung (18) in jeder der Öffnungen aufweist, die für die Aufnahme eines Führungsrohres (12) bemessen sind;
b) ein zylindrisches Rohr (16) konzentrisch am Führungsrohr montiert ist, wobei dieses zylindrische Rohr eine Vielzahl flexibler Laschen (20, 22) umfaßt, die sich nach außen erstrecken und entlang des Umfangs um das untere Ende beabstandet und praktisch auf Höhe des Mittelabschnittes des Rohres angeordnet sind, so daß die Laschen auf Höhe dieses Mittelabschnittes in die zylindrische Senkung (18) des Anordnungs zur Endeinstellung aufgenommen werden.

2. Wiederverwendbare Verriegelungsvorrichtung für Brennelementbündel, die eine Anordnung zur Endeinstellung (14) umfaßt, die eine Vielzahl von Öffnungen besitzt, die die Anordnung durchsetzen und von denen jede für die Aufnahme eines Steuerstabführungsrohres (12) bemessen ist, wobei dieses Führungsrohr eine Endhülse (26) aufweist, die einen Vorsprung (28) aufweist, der sich radial auf Höhe ihres unteren Endes erstreckt, wobei diese Vorrichtung durch ein einziges Teil (10) zwischen dem Führungsrohr (12) und der Anordnung zur Endeinstellung (14) gebildet wird, dadurch gekennzeichnet, daß:
a) die Endhülse (26) eine Nut (32) um den an das Ende der besagten Hülse angrenzenden Umfang herum aufweist; und
b) die Anordnung zur Endeinstellung (14) eine zylindrische Senkung (18) in jeder der Öffnungen aufweist, die für die Aufnahme des Führungsrohres (12) bemessen sind;
c) ein zylindrisches Rohr konzentrisch an der Hülse montiert ist, wobei dieses zylindrische Rohr eine Vielzahl flexibler Laschen (20, 22) aufweist, die sich nach außen erstrecken und entlang des Umfangs um sein unteres Ende beabstandet und praktisch auf Höhe des Mittelabschnittes dieses Rohres angeordnet sind, so daß die Laschen, die auf Höhe des Mittelabschnittes angeordnet sind, in die zylindrische Senkung (18), die in der Anordnung zur Endeinstellung angeordnet ist, aufgenommen werden, und sich eine Vielzahl flexibler Laschen (30) nach innen erstrecken und entlang des Umfangs angrenzend an das obere Ende dieses Rohres beabstandet sind, derart, daß diese zum Inneren gewendeten Laschen so bemessen sind, um in die Nut (32) aufgenommen zu werden, die um die Hülse (26) herum angeordnet ist.

3. Vorrichtung nach Anspruch 1 oder 2, dadurch gekennzeichnet, daß sie am oberen oder unteren Ende des Führungsrohres vorgesehen ist.

## Claims

1. Revisable locking apparatus for fuel assembly having an end fitting system (14) including a plurality of bores therethrough, each sized to receive a guide tube (12) for control rod, said guide tube including an end sleeve (26), having a radially extending shoulder (28) at its lower end, said apparatus being formed all in one piece (10) between the guide tube (12) and the end fitting system (14), characterized in that
a. said end fitting system has a cylindrical counterbore (18) in each of said bores sized to receive a guide tube (12) and,
b. a cylindrical tube (16) concentric with said guide tube, said cylindrical tube having a plurality of flexible tabs (20, 22) extending outwardly and circumferentially spaced apart around the lower end and substantially at the mid section of said tube such that the tabs at said mid section are received in the cylindrical counterbore (18) in the end fitting system.

2. Revisable locking apparatus for fuel assembly having an end fitting system (14) with a plurality of bores therethrough each sized to receive a guide tube (12) for control rod, said guide tube including an end sleeve (26) having a radially extending shoulder (28) at its lower end, said apparatus being formed in one piece (10), between the guide tube (12) and the end fitting system (14), characterized in that :
a . said end sleeve (26) has a groove (32) around the circumference adjacent the end of said sleeve; and
b. said end fitting system (14) includes a cylindrical counterbore (18) in each of said bores to receive the guide tube (12) and
c. a cylindrical tube (16) concentric with said sleeve, said cylindrical tube having a plurality of flexible tabs extending outwardly (20,22) and circumferentially spaced apart around its lower end and substantially at the mid section of said tube such that the tabs at said mid section are received in the cylindrical counterbore (18) positioned in the end fitting system and a plurality of flexible tabs extending inwardly (30) and circumferentially spaced apart adjacent the upper end of said tube whereby said inwardly facing tabs are sized to be received in the groove (32) around said sleeve (26).

3. Apparatus according to any of claims 1 or 2 characterized in that it is provided at the upper or inner end of the guide tube.
